(19) Europäisches Patentamt / European Patent Office / Office européen des brevets

(11) **EP 2 765 288 B1**

(12) **EUROPEAN PATENT SPECIFICATION**

(45) Date of publication and mention
of the grant of the patent:
**28.11.2018 Bulletin 2018/48**

(51) Int Cl.:
***F02C 9/42*** *(2006.01)*

(21) Application number: **14154398.3**

(22) Date of filing: **07.02.2014**

(54) **Device and method for calculating the reference load for gas turbines of a combined cycle plant of the "2+1" type and plant comprising said device**

Vorrichtung und Verfahren zur Berechnung eines Last-Sollwertes für Gasturbinen eines Kombikraftwerks des Typs 2+1 und Anlage mit der Vorrichtung

Dispositif et procédé pour calculer la charge de référence pour les turbines à gaz d'une centrale à cycle combiné du type 2+1 et installation comportant ledit dispositif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2013 IT MI20130184**

(43) Date of publication of application:
**13.08.2014 Bulletin 2014/33**

(73) Proprietor: **Ansaldo Energia S.p.A.**
**Genova (IT)**

(72) Inventors:
• **Repetto, Enrico**
 **16149 Genova (IT)**
• **Ferrua, Stefano**
 **15022 Bergamasco (IT)**
• **Gruppi, Pietro**
 **16146 Genova (IT)**

(74) Representative: **Andreotti, Erika et al**
 **Studio Torta S.p.A.**
 **Via Viotti, 9**
 **10121 Torino (IT)**

(56) References cited:
 **GB-A- 2 117 056     US-A- 3 879 616**
 **US-A- 4 327 294**

• **TRUJILLO R C ET AL: "MODERNIZATION OF A COMPUTER CONTROL SYSTEM IN A COMBINED CYCLE POWER PLANT", ADVANCES IN INSTRUMENTATION AND CONTROL, INSTRUMENT SOCIETY OF AMERICA, RESEARCH TRIANGLE PARK, US, vol. 45, no. PART 01, 1 January 1990 (1990-01-01), pages 165-170, XP000171981, ISSN: 1054-0032**

**Description**

The present invention relates to a device and method for calculating the reference load for gas turbines in a combined cycle plant of the "2+1" type and a plant comprising said device.

As known, controlling the load in combined cycle plants is complex and very problematic because plant efficiency must be optimized in all operating conditions.

Particularly complex is the case of combined cycle plants in which the steam is generated by two gas turbines with respective boilers (the so-called "2+1" type plants) and is sent to a single steam turbine. Such a kind of plant is disclosed in US3879616.

It must be possible to use the gas turbines either individually or in combination and the operation of the steam turbine closely depends on the operating conditions of the gas turbines because their exhaust gas provides the thermal energy needed for steam production.

Furthermore, it is worth noting that many independent suppliers are present in modern electricity distribution grids. Once entrusted to a single subject, all the suppliers are responsible for controlling grid conditions today and the plants must often comply with very strict standards. In all cases, great flexibility is required with regards to the capability of carrying out grid adjustment interventions and responding to extremely variable load requests.

In combined cycle plants in "2+1" configuration, the performance of the two gas turbines (in terms of maximum admissible load, minimum environmental load and maximum admissible load gradient in the various conditions of operation) are generally not identical, even if the two gas turbines are the same. Furthermore, each gas turbine must be subject to load gradient limitations in order to avoid conditions of stress or danger for the gas turbine itself or for the boiler to which is it coupled.

The prior art includes calculating the reference load of the gas turbines of the plant considering the common most conservative condition of both gas turbines during the coordinated operation of the two gas turbines. In particular, the upper reference load is limited by the gas turbine having the least maximum admissible load or which reaches its maximum admissible load first (in case of imbalanced load operation) and the lower reference load is limited by the gas turbine having the highest minimum environmental load or which reaches its minimum environment load first (in case of imbalanced load operation).

Furthermore, the reference load gradient for each gas turbine is limited by the gas turbine which has the minimum admissible load.

It is thus the object of the present invention to provide a device for calculating the reference load for gas turbines of a combined cycle plant of the "2+1" type which is capable of generating the reference load of the first and of the second gas turbine in all operating conditions of the plant, thus optimizing the dynamic performance of the plant as a whole.

In particular, the object of the present invention is to provide a device for calculating the reference load for gas turbines of a combined cycle plant of the "2+1" type which is capable of obtaining the maximum plant load reference gradient even when the gas turbines are characterized by different loads and different load gradients, and the maximum plant reference load variation range.

According to these objects, the present invention relates to a device for calculating the reference load for gas turbines of a combined cycle plant of the "2+1" type as disclosed in claim 1.

It is a further object of the present invention to provide a method capable of generating the reference load for the first and for the second gas turbine in all conditions of operation of the plant so as to optimize the dynamic performance of the plant as a whole.

According to these objects, the present invention relates to a method for calculating the reference load for gas turbines of a combined cycle plant of the "2+1" type as disclosed in claim 13.

Further features and advantages of the present invention will be apparent in the following description of a non-limitative embodiment with reference to the figures in the accompanying drawings, in which:

- figure 1 diagrammatically shows a plant comprising the device according to the present invention;
- figure 2 is a block chart of a detail of the second according to the present invention;
- figure 3 is a block chart of a detail in figure 2;
- figure 4 is a block chart of a detail in figure 3.

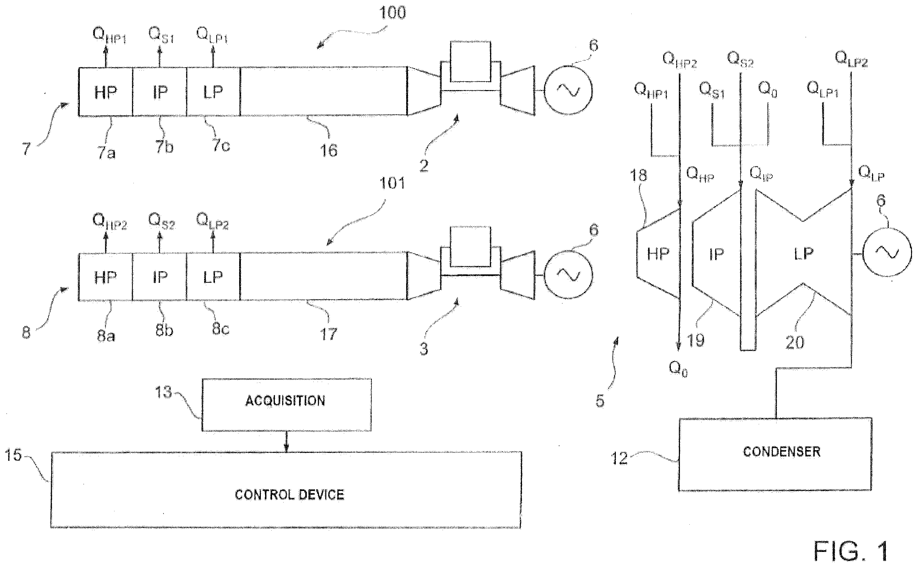

As shown in figure 1, the combined cycle plant for producing electricity of the "2+1" type comprises a first gas turbine 2, a second gas turbine 3, a steam turbine 5, three alternators 6, coupled to the gas turbine 2, 3 and to the steam turbine 5, respectively, a first steam generator 7, a second steam generator 8, a condenser 12, an acquisition module 13 and a control module 15 associated to the first gas turbine 2, to the second gas turbine 3 and to the steam turbine 5.

The exhaust fumes of the first gas turbine 2 and of the second gas turbine 3 are channeled along pipes 16, 17, and provide sources of heat for the first steam generator 7 and for the second steam generator 8, respectively, which feed the steam turbine 5 in turn. In particular, the first gas turbine 2 and the first steam generator 7 form a first steam feeding system 100, while the second gas turbine 3 and the second steam generator 8 form a second steam feeding system 101. The first steam feeding system 100 and the second steam feeding system 101 may be either separately or simultaneously coupled to the steam turbine 5.

More precisely, the plant 1 may operate in two different configurations: a "2+1" configuration and a "1+1" configuration.

A "2+1" configuration means a configuration of the plant 1 in which the first steam feeding system 100 and the second steam feeding system 101 are simultaneously coupled to the steam turbine 5. Both gas turbines 2, 3 operate in combined cycle with the steam turbine 5.

A "1+1" configuration means a configuration of the plant 1 in which only one of either the first steam feeding system 100 or the second steam feeding system 101 is coupled to the steam turbine 5. In this manner, only one of the gas turbines 2, 3 operates in combined cycle with the steam turbine 5, while the other is either inactive or operates autonomously in open cycle. Further operating conditions of the plant are possible, known and not shown for the sake of simplicity.

The steam turbine 5 comprises a high pressure section 18, a medium pressure section 19 and a low pressure section 20. In a different embodiment (not shown), the steam turbine comprises the high pressure section and a medium-low pressure section.

The first steam generator 7 and the second steam generator 8 comprise respective high pressure elements 7a, 8a, medium pressure elements 7b, 8b and low pressure elements 7c, 8c, each of which comprise an economizer, a drum, an evaporator and a superheater (the medium pressure elements 7b, 8b also comprise a re-superheater), the operation of which is known and will not be discussed in detail.

The high pressure elements 7a, 8a, the medium pressure elements 7b, 8b and the low pressure elements 7c, 8c receive water from the condenser 8, by means of specific feeding pumps (not shown).

The high pressure elements 7a, 8a feed a first high pressure steam flow QHP1 and a second high pressure steam flow QHP2 to the high pressure section 18 of the steam turbine 5, respectively.

The medium pressure elements 7a, 8b supply a first medium pressure superheated steam flow QS1 and a second medium pressure superheated steam flow QS2, respectively, which are added to the outlet flow QO coming from the high pressure section 18 of the steam turbine 5 to form a medium pressure steam flow QIP, which once superheated is fed to the medium pressure section 19 of the steam turbine 5.

The low pressure elements 7c, 8c provide a first low pressure steam flow QLP1 and a second low pressure steam flow QLP2 to feed to the low pressure section 20 of the steam turbine 5, respectively.

The exhaust of the low pressure section 20 of the steam turbine 5 is connected to the condenser 12, while the exhaust of the medium pressure section 19 is connected to the inlet of the low pressure section 20.

The operation of the gas turbines 2, 3 and the steam turbine 5 is controlled by control device 15.

In particular, the control device 15 is configured to adjust the reference load RF1 of the first gas turbine 2 and the reference load RF2 of the second gas turbine 3 according to the load conditions required by the plant 1 and according to the current conditions of the plant 1 detected by the acquisition module 13.

In particular, the acquisition module 13 detects the first load TG1 of the first gas turbine 2, the second load TG2 of the second gas turbine 3, the steam load TV of the steam turbine 5 and feeds them to the control device 15.

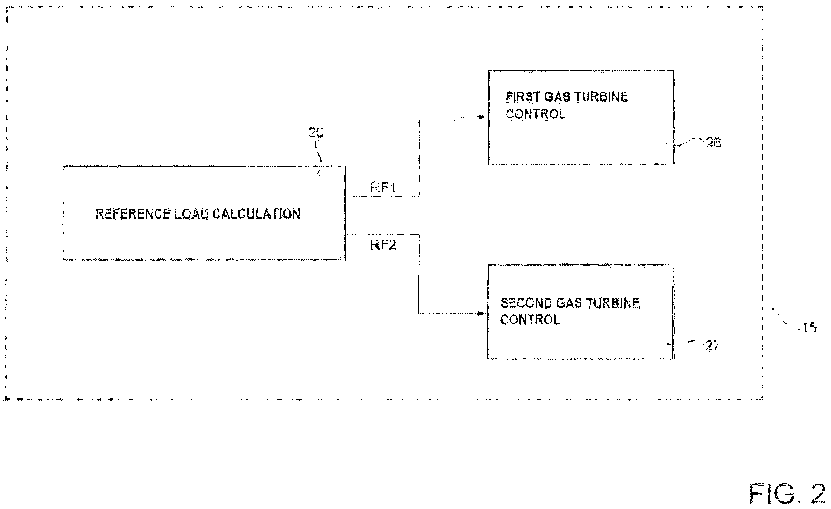

With reference to figure 2, the control device 15 comprises a calculating module of the reference load 25, configured to determine a first reference load RF1 for the first gas turbine 2 and a second reference load RF2 for the second gas turbine 3, a first control module 26, configured to adjust the gas turbine 2 according to the first reference load RF1, and a second control module 27 configured to adjust the second gas turbine 3 according to the second reference load RF2.

The calculating module of the reference load 25 is configured to determine the reference loads RF1 RF2 of the first gas turbine 2 and of the second gas turbine 3, respectively, so as to satisfy the net load request to be delivered to the line.

The first control module 26 and the second control module 27 are known and will not be described in detail hereinafter.

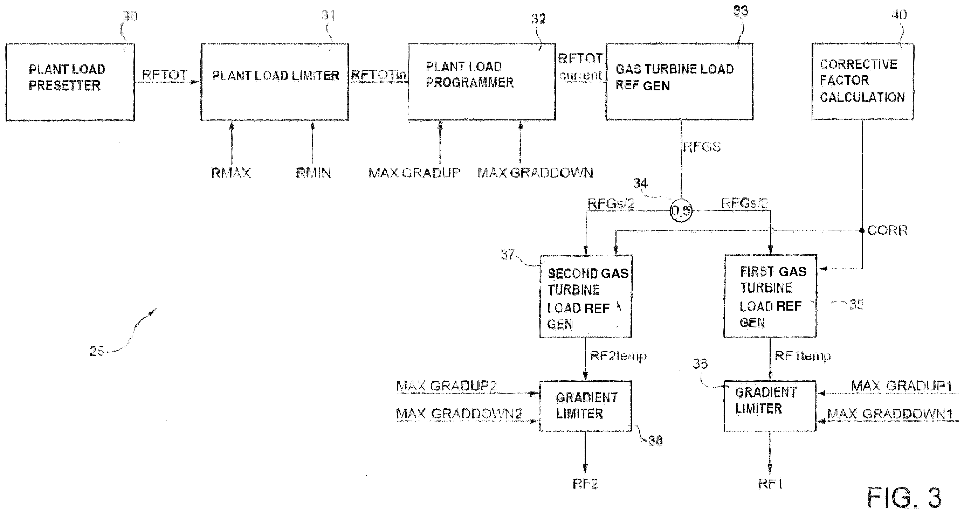

With reference to figure 3, the calculating module of the reference load 25 comprises a system load presetter 30, a plant load limiter 31, a plant load programmer 32, a gas turbine reference load generator 33, a halver node 34, a first gas turbine reference generator 35, a first gradient limiter 36, a second gas turbine reference load generator 37 and a second gradient limiter 38.

The system load presetter 30 contains data related to the load request of the plant 1.

In particular, the system load presetter 30 generates a total load set point RFTOT which may either be manually set by an operator or come from an external load profile (e.g. deriving from the energy market).

The plant load limiter 31 is configured to limit the total load set point RFTOT to a maximum admissible plant load value RMAX and to a minimum admissible plant load RMIN.

The maximum admissible plant load RMAX and the value minimum admissible plant load RMIN are normally predefined according to the type of plant 1 and are supplied manually by an operator during the basic settings entry operations.

The plant load programmer 32 is configured to set the load gradient GRADTOT of the plant 1 and to start/stop the load ramp which evolves starting from the current reference load RFTOTcurrent to reach the limited reference load value RFTOTIN supplied by the system load limiter 31.

The load gradient GRADTOT of the plant 1 is normally predetermined according to the type of plant 1 and is manually supplied by an operator during the basic settings entry operations.

However, the load programmer 32 is configured to limit the load gradient GRADTOT of the plant 1 to values comprised between the load maximum plant increasing gradient MAXGRADUP and the maximum plant decreasing gradient MAXGRADDOWN.

The load maximum plant increasing gradient MAXGRADUP is automatically calculated according to the maximum admissible load increasing gradients of the two gas turbines 2 and 3 according to the following formula:

$$MAXGRADUP = (MAXGRADUP1 + MAXGRADUP2).$$

Where:

- MAXGRADUP2 is the maximum admissible increasing gradient of the second gas turbine 3;
- MAXGRADUP1 is the maximum admissible increasing gradient of the first gas turbine 2.

The load maximum plant decreasing gradient MAXGRADDOWN is automatically calculated according to the maximum admissible load decreasing gradients of the two gas turbines 2 and 3 according to the following formula:

$$MAXGRADDOWN = -|(MAXGRADDOWN1 + MAXGRADDOWN2)|.$$

Where:

- MAXGRADDOWN2 is the maximum admissible decreasing gradient of the second gas turbine 3;
- MAXGRADDOWN1 is the maximum admissible decreasing gradient of the first gas turbine 2.

The plant load programmer 32 thus outputs a current reference load RFTOTcurrent.

The gas turbine reference load generator 33 calculates the total gas turbines RFGs of the first gas turbine 2 and of the second gas turbine 3 as the difference between the current reference load RFTOTcurrent and the load value of the steam turbine V detected by the acquisition module 13.

The total gas turbines reference load value RFGs is fed to the halver node 34, which calculates a halved value of the total gas turbines reference load value reference load RFGs/2 and feeds it to the a first gas turbine reference load generator 35 and to the second gas turbine reference load generator, respectively.

The first gas turbine reference generator load 35 is configured to determine the reference load of the first gas turbine RFltemp according to a common reference value RIFcomm and according to a first corrective value -CORR.

The common reference value RIFcomm is equal to half the total gas turbine reference RFGs.

In particular, the reference load of the first gas turbine RFltemp is calculated as the sum of the common reference value RIFcomm and of the first corrective value -CORR.

Therefore, the reference load of the first gas turbine RFltemp will be equal to:

$$RF1temp = RFGs/2 - CORR$$

Finally, the reference load of the first gas turbine RFltemp is fed to the first gradient limiter 36, which is configured to limit the reference load gradient of the first gas turbine RF1temp to the maximum admissible increasing gradient MAXGRADUP1 of the first gas turbine 2 and to the maximum admissible decreasing gradient MAXGRADOWN1 of the first gas turbine 2.

The first gradient limiter 36 thus provides the first reference load RF1 for the first gas turbine 2 to be fed to the control module of the first gas turbine 26.

The second gas turbine reference load generator 37 is configured to determine the reference load of the second gas turbine RF2temp according to a common reference value RIFcomm and according to a second corrective value +CORR.

The common reference value RIFcomm is equal to half the total gas turbine reference RFGs.

In particular, the reference load of the second gas turbine RF2temp is calculated as the sum of the common reference value RIFcomm and of the second corrective value +CORR according to the following definition:

$$RF2temp= RFGs/2 + CORR$$

Finally, the reference load of the second gas turbine RF2temp is fed to the second gradient limiter 38, which is configured to limit the reference load gradient of the second gas turbine RF2temp to the maximum admissible increasing gradient MAXGRADUP2 of the second gas turbine 3 and to the maximum admissible decreasing gradient MAXGRADOWN2 of the second gas turbine 3.

The second gradient limiter 38 thus outputs the second reference load value RF2 for the second gas turbine 3 to be fed to the control module of the second gas turbine 27.

The first corrective value -CORR and the second corrective value +CORR are calculated by a corrective value calculating module 40.

In the non-limitative example described and illustrated here, the first corrective term -CORR and the second corrective term +CORR have equal absolute value and opposite sign.

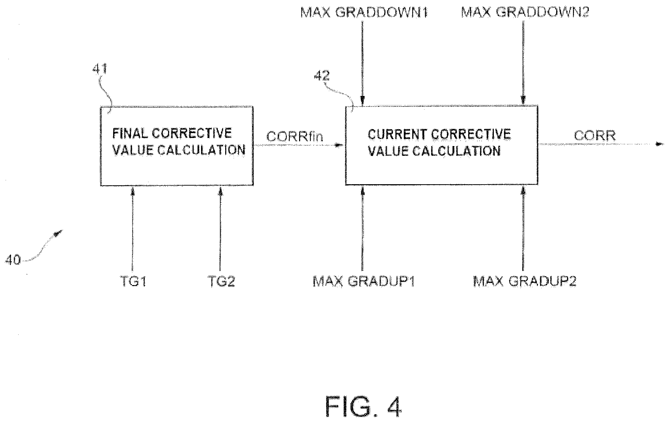

With reference to figure 4, the corrective value calculating module 40 comprises a final corrective value calculating module 41 and a current corrective value calculating module 42.

The final corrective value calculating module 41 is configured to calculate the final corrective value CORRfin as half of the difference between the first load TG1 of the first gas turbine 2 and the second load TG2 of the second gas turbine 3 detected by the acquisition module 13 (CORRfin= (TG1-TG2)/2).

The current corrective value calculating module 42 is configured to calculate the corrective value gradient GRADCORR and to provide a current value of the corrective value CORR.

In particular, the current corrective value calculating module 42 is configured to calculate the gradient of the corrective value GRADCORR according to the following formulas:

$$GRADCORR= |(MAXGRADUP2-MAXGRADUP1)/2|$$

If the gradient of the total gas turbines reference load value RFGs is positive (GRAD(RFGs)>0); in this case, the total gas turbines reference load value RFGs increases. Where:

MAXGRADUP2 is the maximum admissible increasing gradient of the second gas turbine 3;
MAXGRADUP1 is the maximum admissible increasing gradient of the first gas turbine 2.

$$GRADCORR=-|(MAXGRADDOWN2-MAXGRADDOWN1)/2|$$

If the gradient of the total gas turbines reference load value RFGs is negative (GRAD(RFGs)<0); in this case, the total gas turbines reference load value RFGs decreases. Where:

MAXGRADDOWN2 is the maximum admissible decreasing gradient of the second gas turbine 3;
MAXGRADDOWN1 is the maximum admissible decreasing gradient of the first gas turbine 2.

Advantageously, using the device for controlling the reference load of gas turbines in a combined cycle plant 1 of the "2+1" combined type allows to obtain the maximum load variation of the plant 1.

By virtue of the present invention, the maximum plant load increasing gradient MAXGRADUP fed to the plant load limiter 31 is given by the sum of the maximum load increase gradient of the two gas turbines MAXGRADUP1 and MAXGRADUP2. Similarly, the maximum plant load decreasing gradient MAXGRADDOWN fed to the plant load limiter 31 is given by the sum of the maximum load decreasing gradients of the two gas turbines MAXGRADDOWN1 and MAXGRADDOWN2.

Furthermore, if the gradients MAXGRADUP1 and MAXGRADUP2 are mutually different and the total plant reference load RFTOT increases with the gradient MAXGRADUP > 2 * min(MAXGRADUP1, MAXGRADUP2), it is apparent that the two gas turbines will run with imbalanced loads; when the gas turbine with the highest maximum load gradient reaches its maximum admissible load, the second gas turbine may continue to increase the load with its gradient in order to satisfy the plant reference load gradient MAXGRADUP until the current plant reference load RFTOTcurrent equals the total plant reference load value RFTOTIN. The same applies in the case of plant load decreasing reference RFTOTcurrent with load decreasing gradient MAXGRADDOWN < 2 * max(MAXGRADDOWN1, MAXGRADDOWN2).

The present invention requires to inhibit the increasing or decreasing load ramps of the plant 1 only when the first and the second gas turbine 2 and 3 both reach their maximum gradients.

By virtue of the present invention, the admissible load variation for the plant 1 is as broad as possible, because both the first gas turbine 2 and the second gas turbine 3 may exploit their potential to the maximum regardless of each other.

Finally, the present invention allows to manage the two gas turbines having different load range separately (e. g. a different minimum environment load value).

It is finally apparent that changes and variations may be made to the described device and method. The scope of the invention is defined in the appended claims.

## Claims

1. Device for calculating the reference load for gas turbines of a combined cycle plant of the "2+1" type, comprising at least one calculating stage (33, 34, 35, 36, 37, 38, 40) configured to calculate a first reference load (RF1) for a first gas turbine (2) of the plant (1) and a second reference load (RF2) for a second gas turbine (3) of the plant (1) on the basis of a total load set point (SPTOT) of the plant (1), of a first current load (TG1) of the first gas turbine (2), of a second current load (TG2) of the second gas turbine (3) and on the basis of a current steam load (TV) of a steam turbine (5) of the plant (1); the device being **characterized in that** the calculating stage (33, 34, 35, 36, 37, 38, 40) is configured to calculate the first reference load (RF1) and the second reference load (RF2) on the basis of a common reference value (RFGS/2) and on the basis of a first corrective value (-CORR) and of a second corrective value (+CORR); wherein the first corrective value (-CORR) has the same absolute value of the second corrective value (+CORR); wherein the first corrective value (-CORR) and the second corrective value (+CORR) have opposite signs.

2. Device according to claim 1, wherein the calculating stage (33, 34, 35, 36, 37, 38, 40) is configured to calculate the first corrective value (-CORR) as the half of the difference between the first current load (TG1) and the second current load (TG2).

3. Device according to anyone of the foregoing claims, wherein the calculating stage (33, 34, 35, 36, 37, 38, 40) is configured to calculate a corrective value gradient (GRADCORR).

4. Device according to claim 3, wherein the calculating stage (33, 34, 35, 36, 37, 38, 40) is configured to calculate the corrective value gradient (GRADCORR) according to the following formula:

$$\text{GRADCORR} = \left| (\text{MAXGRADUP2} - \text{MAXGRADUP1})/2 \right|$$

when the gradient of the total gas turbines load reference value (RFGs) is positive;
where:

- the total gas turbines load reference value (RFGs) is equal to the difference between the total current load reference value (RFTOTcurrent) of the plant (1) and the current steam load (TV) of the steam turbine (5);
- MAXGRADUP2 is the maximum admissible increasing gradient of the second gas turbine (3);
- MAXGRADUP1 is the maximum admissible increasing gradient of the first gas turbine (2).

5. Device according to claim 3, wherein the calculating stage (33, 34, 35, 36, 37, 38, 40) is configured to calculate a corrective value gradient (GRADCORR) according to the following formula:

$$\text{GRADCORR} = -\left| (\text{MAXGRADDOWN2} - \text{MAXGRADDOWN1})/2 \right|$$

when the gradient of the total gas turbines load reference value (RFGs) is negative;
where:

- the total gas turbines load reference value (RFGs) is equal to the difference between the total current load reference value (RFTOTcurrent) of the plant (1) and the current steam load (TV) of the steam turbine (5);
- MAXGRADDOWN2 is the maximum admissible decreasing gradient of the second gas turbine (3);
- MAXGRADDOWN1 is the maximum admissible decreasing gradient of the first gas turbine (2).

6. Device according to anyone of the foregoing claims, wherein the calculating stage (33, 34, 35, 36, 37, 38, 40) comprises a first limiter (36) configured to limit the variations of the first reference load (RF1) to values comprised between the maximum admissible decreasing gradient (MAXGRADDOWN1) of the first gas turbine (2) and the maximum admissible increasing gradient (MAXGRADUP1) of the first gas turbine (2).

7. Device according to anyone of the foregoing claims, wherein the calculating stage (33, 34, 35, 36, 37, 38, 40) comprises a second limiter (38) configured to limit the variations of the second reference load (RF2) to values comprised between the maximum admissible decreasing gradient (MAXGRADDOWN2) of the second gas turbine (3) and the maximum admissible increasing gradient (MAXGRADUP2) of the second gas turbine (3).

8. Device according to any one of the foregoing claims, wherein the calculating stage (33, 34, 35, 36, 37, 38, 40) is configured to calculate the common reference value (RFGS/2) as the half of the difference between the total current load reference value (RFTOTcurrent) of the plant (1) and the current steam load (TV) of the steam turbine (5).

9. Device according to any one of foregoing claims, wherein the calculating stage (33, 34, 35, 36, 37, 38, 40) is configured to limit the load gradient (GRADTOT) of the plant (1) to values comprised between a maximum plant increasing gradient (MAXGRADUP) and a maximum plant decreasing gradient (MAXGRADDOWN).

10. Device according to claim 9, wherein the calculating stage (33, 34, 35, 36, 37, 38, 40) is configured to calculate the maximum plant increasing gradient (MAXGRADUP) on the basis of maximum admissible increasing gradient (MAXGRADUP1) of the first gas turbine (2) e on the basis of the maximum admissible increasing gradient (MAXGRADUP2) of the second gas turbine (3), preferably according to the following formula:

$$\mathrm{MAXGRADUP=(MAXGRADUP1+MAXGRADUP2)}.$$

11. Device according to claim 9 or 10, wherein the calculating stage (33, 34, 35, 36, 37, 38, 40) is configured to calculate the maximum plant decreasing gradient (MAXGRADDOWN) on the basis of the maximum admissible decreasing gradient (MAXGRADDOWN1) of the first gas turbine (2) e on the basis of the maximum admissible decreasing gradient (MAXGRADDOWN2) of the second gas turbine (3), preferably according to the following formula:

$$\mathrm{MAXGRADDOWN=-|(MAXGRADDOWN1\ +\ MAXGRADDOWN2)|}.$$

12. Combined cycle plant of the "2+1" type comprising a device for calculating the load reference of gas turbines as claimed in anyone of the foregoing claims.

13. Method for calculating the load reference of gas turbines of a combined cycle plant of the "2+1" type comprising the step of calculating a first reference load (RF1) for a first gas turbine (2) of the plant (1) and a second reference load (RF2) for a second gas turbine (3) of the plant (1) on the basis of a total load set point (SPTOT) of the plant (1), of a first current load(TG1) of the first gas turbine (2), of a second current load (TG2) of the second gas turbine (3) and on the basis of a current steam load (TV) of a steam turbine (5) of the plant (1); the method being **characterized by** the fact that the step of calculating a first reference load (RF1) and a second reference load (RF2) comprises the step of calculating the first reference load (RF1) and the second reference load (RF2) on the basis of a common reference value (RFGS/2) and on the basis of a first corrective value (-CORR) and of a second corrective value (+CORR); wherein the first corrective value (-CORR) is has the same absolute value of the second corrective value (+CORR); wherein first corrective value (-CORR) and the second corrective value (+CORR) have opposite signs.

14. Method according to claim 13 , wherein the step of calculating a first reference load (RF1) and a second reference load (RF2) comprises the step of calculating the first corrective value (-CORR) as the half of the difference between the first current load (TG1) and the second current load (TG2).

15. Method according to claim 13 or 14, comprising the step of calculating a corrective value gradient (GRADCORR).

16. Method according to claim 15, wherein the step of calculating a corrective value gradient (GRADCORR) comprises the step of calculating a corrective value gradient (GRADCORR) according to the following formula:

$$\text{GRADCORR=} \left| (\text{MAXGRADUP2-MAXGRADUP1}) /2 \right|$$

when the gradient of the total gas turbines load reference value (RFGs) is positive;
where:

- the total gas turbines load reference value (RFGs) is equal to the difference between the total current load reference value (RFTOTcurrent) of the plant (1) and the current steam load (TV) of the steam turbine (5);
- MAXGRADUP2 is the maximum admissible increasing gradient of the second gas turbine (3);
- MAXGRADUP1 is the maximum admissible increasing gradient of the first gas turbine (2).

17. Method according to claim 15, wherein the step of calculating a corrective value gradient (GRADCORR) comprises the step of calculating a corrective value gradient (GRADCORR) according to the following formula:

$$\text{GRADCORR=-} \left| (\text{MAXGRADDOWN2-MAXGRADDOWN1}) /2 \right|$$

when the gradient of the total gas turbines load reference value (RFGs) is negative;
where:

- the total gas turbines load reference value (RFGs) is equal to the difference between the total current load reference value (RFTOTcurrent) of the plant (1) and the current steam load (TV) of the steam turbine (5);
- MAXGRADDOWN2 is the maximum admissible decreasing gradient of the second gas turbine (3);
- MAXGRADDOWN1 is the maximum admissible decreasing gradient of the first gas turbine (2).

18. Method according to any one of claims from 13 to 17, comprising the step of limiting the variations of the first reference load (RF1) to values comprised between the maximum admissible decreasing gradient (MAXGRADDOWN1) of the first gas turbine (2) and the maximum admissible increasing gradient (MAXGRADUP1) of the first gas turbine (2) .

19. Method according to any one of claims from 13 to 18, comprising the step of limit the variations of the second reference load (RF2) to values comprised between the maximum admissible decreasing gradient (MAXGRADDOWN2) of the second gas turbine (3) and the maximum admissible increasing gradient (MAXGRADUP2) of the second gas turbine (3) .

20. Method according to any one of claims from 13 to 19, wherein the step of calculating a first reference load (RF1) and a second reference load (RF2) comprises the step of calculating the common reference value (RFGS/2) as the half of the difference between the total current load reference value (RFTOTcurrent) of the plant (1) and the current steam load (TV) of the a steam turbine (5).

21. Method according to any one of claims from 13 to 20, comprising the step of limiting the load gradient (GRADTOT) of the plant (1) to values comprised between a maximum plant increasing gradient (MAXGRADUP) and a maximum plant decreasing gradient (MAXGRADDOWN).

22. Method according to Claim 21, wherein the step of limiting the load gradient (GRADTOT) of the plant (1) comprises the step of calculating the maximum plant increasing gradient (MAXGRADUP) on the basis of the maximum admissible increasing gradient (MAXGRADUP1) of the first gas turbine (2) and on the basis of the maximum admissible increasing gradient (MAXGRADUP2) of the second gas turbine (3), preferably according to the following formula:

$$MAXGRADUP=(MAXGRADUP1+MAXGRADUP2).$$

**23.** Method according to Claim 21 or 22, wherein the step of limiting the load gradient (GRADTOT) of the plant (1) comprises the step of calculating the maximum plant decreasing gradient (MAXGRADDOWN) on the basis of the maximum admissible decreasing gradient (MAXGRADDOWN1) of the first gas turbine (2) and on the basis of the maximum admissible decreasing gradient (MAXGRADDOWN2) of the second gas turbine (3), preferably according to the following formula: MAXGRADDOWN=-|(MAXGRADDOWN1 + MAXGRADDOWN2)|.

**Patentansprüche**

**1.** Vorrichtung zur Berechnung eines Last-Sollwertes für Gasturbinen eines Kombikraftwerks des Typs "2+1", bestehend aus mindestens einer Berechnungsphase (33, 34, 35, 36, 37, 38, 40), die so konfiguriert ist, dass ein erster Last-Sollwert (RF1) für eine erste Gasturbine (2) der Anlage (1) und ein zweiter Last-Sollwert (RF2) für eine zweite Gasturbine (3) der Anlage (1) auf der Grundlage eines Gesamtlast-Sollwerts (SPTOT) der Anlage (1) berechnet wird, ferner einer ersten aktuellen Last (TG1) der ersten Gasturbine (2), einer zweiten aktuellen Last (TG2) der zweiten Gasturbine (3) und auf Grundlage einer aktuellen Dampflast (TV) einer Dampfturbine (5) der Anlage (1); die Vorrichtung ist **dadurch gekennzeichnet, dass** die Berechnungsphase (33, 34, 35, 36, 37, 38, 40) so konfiguriert ist, um den ersten Last-Sollwert (RF1) und den zweiten Last-Sollwert (RF2) auf Grundlage eines gemeinsamen Sollwertes (RFGS/2) und auf Grundlage eines ersten Korrekturwertes (-CORR) und eines zweiten Korrekturwertes (+ CORR) zu berechnen; wobei der erste Korrekturwert (-CORR) den gleichen absoluten Wert wie der zweite Korrekturwert (+ CORR) hat; und der erste Korrekturwert (-CORR) und der zweite Korrekturwert (+ CORR) durch entgegengesetzte Vorzeichen gekennzeichnet sind.

**2.** Vorrichtung nach Anspruch 1, **dadurch gekennzeichnet, dass** die Berechnungsphase (33, 34, 35, 36, 37, 38, 40) so konfiguriert ist, um den ersten Korrekturwert (-CORR) als die Hälfte der Differenz zwischen der ersten aktuellen Last (TG1) und der zweiten aktuellen Last (TG2) zu berechnen.

**3.** Vorrichtung nach jedem der vorhergehenden Ansprüche, **dadurch gekennzeichnet, dass** die Berechnungsphase (33, 34, 35, 36, 37, 38, 40) so konfiguriert ist, um einen Gradient-Korrekturwert (GRADCORR) zu berechnen.

**4.** Vorrichtung nach Anspruch 3, **dadurch gekennzeichnet, dass** die Berechnungsphase (33, 34, 35, 36, 37, 38, 40) so konfiguriert ist, um den Gradient-Korrekturwert (GRADCORR) gemäß der folgenden Formel zu berechnen:

$$GRADCORR= | (MAXGRADUP2-MAXGRADUP1) / 2 |$$

falls der Gradient des Gasturbinen-Gesamtlast-Sollwertes (RFGs) positiv ist;
Es gilt:

    - Der Gasturbinen-Gesamtlast-Sollwert (RFGs) ist gleich der Differenz zwischen dem Gesamt-Sollwert der aktuellen Last (RFTOTcurrent) der Anlage (1) und der aktuellen Dampflast (TV) der Dampfturbine (5);
    - MAXGRADUP2 ist die maximal zulässige Gradientenzunahme der zweiten Gasturbine (3);
    - MAXGRADUP 1 ist die maximal zulässige Gradientenzunahme der ersten Gasturbine (2).

**5.** Vorrichtung nach Anspruch 3, **dadurch gekennzeichnet, dass** die Berechnungsphase (33, 34, 35, 36, 37, 38, 40) so konfiguriert ist, um einen Gradient-Korrekturwert (GRADCORR) gemäß der folgenden Formel zu berechnen:

$$GRADCORR= - | (MAXGRADDOWN2-MAXGRADDOWN1) / 2 |$$

falls der Gradient des Gasturbinen-Gesamtlast-Sollwertes (RFGs) negativ ist;
Es gilt:

    - Der Gasturbinen-Gesamtlast-Sollwert (RFGs) ist gleich der Differenz zwischen dem Gesamt-Sollwert der aktuellen Last (RFTOTcurrent) der Anlage (1) und der aktuellen Dampflast (TV) der Dampfturbine (5);

- MAXGRADDOWN2 ist die maximal zulässige Gradientenabnahme der zweiten Gasturbine (3);
- MAXGRADDOWN1 ist die maximal zulässige Gradientenabnahme der ersten Gasturbine (2).

6. Vorrichtung nach jedem der vorstehenden Ansprüche, **dadurch gekennzeichnet, dass** die Berechnungsphase (33, 34, 35, 36, 37, 38, 40) einen ersten Begrenzer (36) umfasst, der so konfiguriert ist, um Schwankungen des ersten Last-Sollwertes (RF1) auf Werte zwischen der maximal zulässigen Gradientenabnahme (MAXGRADDOWN1) der ersten Gasturbine (2) und der maximal zulässigen Gradientenzunahme (MAXGRADUP1) der ersten Gasturbine (2) zu begrenzen.

7. Vorrichtung nach jedem der vorstehenden Ansprüche, **dadurch gekennzeichnet, dass** die Berechnungsphase (33, 34, 35, 36, 37, 38, 40) einen zweiten Begrenzer (38) umfasst, der so konfiguriert ist, um Schwankungen des zweiten Last-Sollwertes (RF2) auf Werte zwischen der maximal zulässigen Gradientenabnahme (MAXGRADDOWN2) der zweiten Gasturbine (3) und der maximal zulässigen Gradientenzunahme (MAXGRADUP2) der zweiten Gasturbine (3) zu begrenzen.

8. Vorrichtung nach jedem der vorstehenden Ansprüche, **dadurch gekennzeichnet, dass** die Berechnungsphase (33, 34, 35, 36, 37, 38, 40) so konfiguriert ist, dass der gemeinsame Sollwert (RFGS/2) als Hälfte der Differenz zwischen dem Gesamt-Sollwert der aktuellen Last (RFTOTcurrent) der Anlage (1) und der aktuellen Dampflast (TV) der Dampfturbine (5) berechnet wird.

9. Vorrichtung nach jedem der vorstehenden Ansprüche, **dadurch gekennzeichnet, dass** die Berechnungsphase (33, 34, 35, 36, 37, 38, 40) so konfiguriert ist, um den Last-Gradienten (GRADTOT) der Anlage (1) auf Werte zwischen einer maximalen Gradientenzunahme (MAXGRADUP) und einer maximalen Gradientenabnahme (MAXGRADDOWN) zu begrenzen.

10. Vorrichtung nach Anspruch 9, **dadurch gekennzeichnet, dass** die Berechnungsphase (33, 34, 35, 36, 37, 38, 40) so konfiguriert ist, um die maximale Gradientenzunahme (MAXGRADUP) der Anlage auf der Grundlage der maximal zulässigen Gradientenzunahme (MAXGRADUP1) der ersten Gasturbine (2) und auf Grundlage der maximal zulässigen Gradientenzunahme (MAXGRADUP2) der zweiten Gasturbine (3) zu berechnen, vorzugsweise gemäß der folgenden Formel:

$$MAXGRADUP = (MAXGRADUP1 + MAXGRADUP2).$$

11. Vorrichtung nach Anspruch 9 oder 10, **dadurch gekennzeichnet, dass** die Berechnungsphase (33, 34, 35, 36, 37, 38, 40) so konfiguriert ist, um die maximal zulässige Gradientenabnahme (MAXGRADDOWN) der Anlage auf Grundlage der maximal zulässigen Gradientenabnahme (MAXGRADDOWN 1) der ersten Gasturbine (2) und auf Grundlage der maximal zulässigen Gradientenabnahme (MAXGRADDOWN2) der zweiten Gasturbine (3) zu berechnen, vorzugsweise gemäß der folgenden Formel:

$$MAXGRADDOWN = - | (MAXGRADDOWN1 + MAXGRADDOWN2) |.$$

12. Kombikraftwerk des Typs 2+1 mit einer Vorrichtung zur Berechnung der Solllast von Gasturbinen gemäß jedem einzelnen der vorstehenden Ansprüche.

13. Verfahren zur Berechnung eines Last-Sollwertes von Gasturbinen eines Kombikraftwerks des Typs 2+1, bestehend aus einem Schritt der Berechnung eines ersten Last-Sollwertes (RF1) für eine erste Gasturbine (2) der Anlage (1) und eines zweiten Last-Sollwertes (RF2) für eine zweite Gasturbine (3) der Anlage (1) auf der Grundlage eines Gesamtlast-Sollwertes (SPTOT) der Anlage (1), ferner einer ersten aktuellen Last (TG1) der ersten Gasturbine (2), einer zweiten aktuellen Last (TG2) der zweiten Gasturbine (3) und auf Grundlage einer aktuellen Dampflast (TV) einer Dampfturbine (5) der Anlage (1); das Verfahren ist **dadurch gekennzeichnet, dass** der Schritt der Berechnung eines ersten Last-Sollwertes (RF1) und eines zweiten Last-Sollwertes (RF2) auf Grundlage eines gemeinsamen Sollwertes (RFGS/2) und auf Grundlage eines ersten Korrekturwertes (-CORR) und eines zweiten Korrekturwertes (+CORR) erfolgt; wobei der erste Korrekturwert (-CORR) den gleichen absoluten Wert wie der zweite Korrekturwert (+CORR) hat; und der erste Korrekturwert (-CORR) und der zweite Korrekturwert (+CORR) durch entgegengesetzte Vorzeichen gekennzeichnet sind.

**14.** Verfahren nach Anspruch 13, **dadurch gekennzeichnet, dass** der Schritt der Berechnung eines ersten Last-Sollwertes (RF1) und eines zweiten Last-Sollwertes (RF 2) den Schritt der Berechnung des ersten Korrekturwertes (-CORR) als Hälfte der Differenz zwischen der ersten aktuellen Last (TG1) und der zweiten aktuellen Last (TG2) beinhaltet.

**15.** Verfahren nach Anspruch 13 oder 14, bestehend aus dem Schritt der Berechnung eines Gradient-Korrekturwertes (GRADCORR).

**16.** Verfahren nach Anspruch 15, **dadurch gekennzeichnet, dass** der Schritt der Berechnung eines Gradient-Korrekturwertes (GRADCORR) den Schritt der Berechnung eines Gradient-Korrekturwertes (GRADCORR) gemäß folgender Formel beinhaltet:

$$\text{GRADCORR= | (MAXGRADUP2 - MAXGRADUP1) / 2 |}$$

falls der Gradient des Gasturbinen-Gesamtlast-Sollwertes (RFGs) positiv ist;
Es gilt:

- Der Gasturbinen-Gesamtlast-Sollwert (RFGs) ist gleich der Differenz zwischen dem Gesamt-Sollwert der aktuellen Last (RFTOTcurrent) der Anlage (1) und der aktuellen Dampflast (TV) der Dampfturbine (5);
- MAXGRADUP2 ist die maximal zulässige Gradientenzunahme der zweiten Gasturbine (3);
- MAXGRADUP 1 ist die maximal zulässige Gradientenzunahme der ersten Gasturbine (2).

**17.** Verfahren nach Anspruch 15, **dadurch gekennzeichnet, dass** der Schritt der Berechnung eines Gradient-Korrekturwertes (GRADCORR) den Schritt der Berechnung eines Gradient-Korrekturwertes (GRADCORR) gemäß folgender Formel beinhaltet:

$$\text{GRADCORR= | (MAXGRADDOWN2 - MAXGRADDOWN1) / 2 |}$$

falls der Gradient des Gasturbinen-Gesamtlast-Sollwertes (RFGs) negativ ist;
Es gilt:

- Der Gasturbinen-Gesamtlast-Sollwert (RFGs) ist gleich der Differenz zwischen dem Gesamt-Sollwert der aktuellen Last (RFTOTcurrent) der Anlage (1) und der aktuellen Dampflast (TV) der Dampfturbine (5);
- MAXGRADDOWN2 ist die maximal zulässige Gradientenabnahme der zweiten Gasturbine (3);
- MAXGRADDOWN1 ist die maximal zulässige Gradientenabnahme der ersten Gasturbine (2).

**18.** Verfahren nach jedem der Ansprüche 13 bis 17, bestehend aus dem Schritt der Begrenzung der Schwankungen des ersten Last-Sollwertes (RF1) auf Werte zwischen der maximal zulässigen Gradientenabnahme (MAXGRADDOWN1) der ersten Gasturbine (2) und der maximal zulässigen Gradientenzunahme (MAXGRADUP1) der ersten Gasturbine (2).

**19.** Verfahren nach jedem der Ansprüche 13 bis 18, bestehend aus dem Schritt zur Begrenzung der Schwankungen des zweiten Last-Sollwertes (RF2) auf Werte zwischen der maximal zulässigen Gradientenabnahme (MAXGRADDOWN2) der zweiten Gasturbine (3) und der maximal zulässigen Gradientenzunahme (MAXGRADUP2) der zweiten Gasturbine (3).

**20.** Verfahren nach jedem der Ansprüche 13 bis 19, **dadurch gekennzeichnet, dass** der Schritt zur Berechnung eines ersten Last-Sollwertes (RF1) und eines zweiten Last-Sollwertes (RF2) den Schritt der Berechnung des gemeinsamen Sollwertes (RFGS/2) als Hälfte der Differenz zwischen dem Gesamt-Sollwert der aktuellen Last (RFTOTcurrent) der Anlage (1) und der aktuellen Dampflast (TV) der Dampfturbine (5) beinhaltet.

**21.** Verfahren nach jedem der Ansprüche 13 bis 20, bestehend aus dem Schritt zur Begrenzung des Last-Gradienten (GRADTOT) der Anlage (1) auf Werte zwischen einer maximalen Gradientenzunahme (MAXGRADUP) der Anlage und einer maximalen Gradientenabnahme (MAXGRADDOWN) der Anlage.

**22.** Verfahren nach Anspruch 21, **dadurch gekennzeichnet, dass** der Schritt der Begrenzung des Last-Gradienten (GRADTOT) der Anlage (1) den Schritt der Berechnung der maximal zulässigen Gradientenzunahme (MAXGRADUP) auf Grundlage der maximal zulässigen Gradientenzunahme (MAXGRADUP1) der ersten Gasturbine (2) und auf Grundlage der maximal zulässigen Gradientenzunahme (MAXGRADUP2) der zweiten Gasturbine (3) beinhaltet, vorzugsweise gemäß der folgenden Formel:

$$\mathtt{MAXGRADUP=(MAXGRADUP1+MAXGRADUP2).}$$

**23.** Verfahren nach Anspruch 21 oder 22, **dadurch gekennzeichnet, dass** der Schritt zur Begrenzung des Last-Gradienten (GRADTOT) der Anlage (1) den Schritt der Berechnung der maximal zulässigen Gradientenabnahme (MAXGRADDOWN) der Anlage auf der Grundlage der maximal zulässigen Gradientenabnahme (MAXGRADDOWN1) der ersten Gasturbine (2) und auf der Grundlage der maximal zulässigen Gradientenabnahme (MAXGRADDOWN2) der zweiten Gasturbine (3) beinhaltet, vorzugsweise gemäß der folgenden Formel: MAXGRADDOWN= - | (MAXGRADDOWN1 + MAXGRADDOWN2)|.

**Revendications**

**1.** Dispositif de calcul de la charge de référence de turbines à gaz d'une centrale à cycle combiné du type « 2 + 1 », comprenant au moins un étage de calcul (33, 34, 35, 36, 37, 38, 40) configuré pour calculer une première charge de référence (RF1) d'une première turbine à gaz (2) de la centrale (1), et une seconde charge de référence (RF2) d'une seconde turbine à gaz (3) de la centrale (1), sur la base d'un point de consigne de charge totale (SPTOT) de la centrale (1), d'une première charge actuelle (TG1) de la première turbine à gaz (2), d'une seconde charge actuelle (TG2) de la seconde turbine à gaz (3), et sur la base d'une charge de vapeur actuelle (TV) d'une turbine à vapeur (5) de la centrale (1) ; le dispositif étant **caractérisé en ce que** l'étage de calcul (33, 34, 35, 36, 37, 38, 40) est configuré pour calculer la première charge de référence (RF1) et la seconde charge de référence (RF2) sur la base d'une valeur de référence commune (RFGS/2), et sur la base d'une première valeur de correction (- CORR), et d'une seconde valeur de correction (+ CORR) ; où la première valeur de correction (- CORR) présente la même valeur absolue que la seconde valeur de correction (+ CORR) ; où la première valeur de correction (- CORR) et la seconde valeur de correction (+ CORR) présentent des signes opposés.

**2.** Dispositif selon la revendication 1, dans lequel l'étage de calcul (33, 34, 35, 36, 37, 38, 40) est configuré pour calculer la première valeur de correction (- CORR) comme étant égale à la moitié de la différence entre la première charge actuelle (TG1) et la seconde charge actuelle (TG2).

**3.** Dispositif selon l'une quelconque des revendications précédentes, où l'étage de calcul (33, 34, 35, 36, 37, 38, 40) est configuré pour calculer un gradient de valeur de correction (GRADCORR).

**4.** Dispositif selon l'une quelconque des revendications précédentes, où l'étage de calcul (33, 34, 35, 36, 37, 38, 40) est configuré pour calculer le gradient de valeur de correction (GRADCORR) selon la formule suivante :

$$\mathrm{GRADCORR} = |(\mathrm{MAXGRADUP2} - \mathrm{MAXGRADUP1}) \:/\: 2|$$

lorsque le gradient de la valeur de référence de charge totale des turbines à gaz (RFGs) est positif ;
où :

- la valeur de référence de charge totale des turbines à gaz (RFGs) est égale à la différence entre la valeur de référence de charge actuelle totale (RFTOTcurrent) de la centrale (1), et la charge de vapeur actuelle (TV) de la turbine à vapeur (5) ;
- MAXGRADUP2 est le gradient croissant admissible maximum de la seconde turbine à gaz (3) ;
- MAXGRADUP1 est le gradient croissant admissible maximum de la première turbine à gaz (2) ;

**5.** Dispositif selon l'une quelconque des revendications précédentes, où l'étage de calcul (33, 34, 35, 36, 37, 38, 40) est configuré pour calculer un gradient de valeur de correction (GRADCORR) selon la formule suivante :

$$GRADCORR = - |(MAXGRADDOWN2 - MAXGRADDOWN1) / 2|$$

lorsque le gradient de la valeur de référence de charge totale des turbines à gaz (RFGs) est négatif ;
où :

- la valeur de référence de charge totale des turbines à gaz (RFGs) est égale à la différence entre la valeur de référence de charge actuelle totale (RFTOTcurrent) de la centrale (1), et la charge de vapeur actuelle (TV) de la turbine à vapeur (5) ;
- MAXGRADDOWN2 est le gradient décroissant admissible maximum de la seconde turbine à gaz (3) ;
- MAXGRADDOWN1 est le gradient décroissant admissible maximum de la première turbine à gaz (2) ;

6. Dispositif selon l'une quelconque des revendications précédentes, dans lequel l'étage de calcul (33, 34, 35, 36, 37, 38, 40) comprend un premier dispositif de limitation (36) configuré pour limiter les variations de la première charge de référence (RF1) à des valeurs comprises entre le gradient décroissant admissible maximum (MAXGRADDOWN1) de la première turbine à gaz (2), et le gradient croissant admissible maximum (MAXGRADUP1) de la première turbine à gaz (2).

7. Dispositif selon l'une quelconque des revendications précédentes, dans lequel l'étage de calcul (33, 34, 35, 36, 37, 38, 40) comprend un second dispositif de limitation (38) configuré pour limiter les variations de la seconde charge de référence (RF2) à des valeurs comprises entre le gradient décroissant admissible maximum (MAXGRADDOWN2) de la seconde turbine à gaz (3), et le gradient croissant admissible maximum (MAXGRADUP2) de la seconde turbine à gaz (3).

8. Dispositif selon l'une quelconque des revendications précédentes, dans lequel l'étage de calcul (33, 34, 35, 36, 37, 38, 40) est configuré pour calculer la valeur de référence commune (RFGS/2) comme étant égale à la moitié de la différence entre la valeur de référence de charge actuelle (RFTOTcurrent) de la centrale (1), et la charge de vapeur actuelle (TV) de la turbine à vapeur (5).

9. Dispositif selon l'une quelconque des revendications précédentes, dans lequel l'étage de calcul (33, 34, 35, 36, 37, 38, 40) est configuré pour limiter le gradient de charge (GRADTOT) de la centrale (1) à des valeurs comprises entre un gradient croissant de centrale maximum (MAXGRADUP), et un gradient décroissant de centrale maximum (MAXGRADDOWN).

10. Dispositif selon la revendication 9, dans lequel l'étage de calcul (33, 34, 35, 36, 37, 38, 40) est configuré pour calculer le gradient croissant de centrale maximum (MAXGRADUP), sur la base du gradient croissant admissible maximum (MAXGRADUP1) de la première turbine à gaz (2), et sur la base du gradient croissant admissible maximum (MAXGRADUP2) de la seconde turbine à gaz (3), de préférence selon la formule suivante : MAXGRADUP = (MAXGRADUP1 + MAXGRADUP2).

11. Dispositif selon la revendication 9 ou 10, dans lequel l'étage de calcul (33, 34, 35, 36, 37, 38, 40) est configuré pour calculer le gradient décroissant de centrale maximum (MAXGRADDOWN), sur la base du gradient décroissant admissible maximum (MAXGRADDOWN1) de la première turbine à gaz (2), et sur la base du gradient décroissant admissible maximum (MAXGRADDOWN2) de la seconde turbine à gaz (3), de préférence selon la formule suivante :

$$MAXGRADDOWN = - |(MAXGRADDOWN1 + MAXGRADDOWN2)|.$$

12. Centrale à cycle combiné du type « 2 + 1 » comprenant un dispositif de calcul de la référence de charge de turbines à gaz selon l'une quelconque des revendications précédentes.

13. Procédé de calcul de la charge de référence de turbines à gaz d'une centrale à cycle combiné du type « 2 + 1 », comprenant les étapes de calcul d'une première charge de référence (RF1) d'une première turbine à gaz (2) de la centrale (1), et d'une seconde charge de référence (RF2) d'une seconde turbine à gaz (3) de la centrale (1), sur la base d'un point de consigne de charge totale (SPTOT) de la centrale (1), d'une première charge actuelle (TG1) de la première turbine à gaz (2), d'une seconde charge actuelle (TG2) de la seconde turbine à gaz (3), et sur la base d'une charge de vapeur actuelle (TV) d'une turbine à vapeur (5) de la centrale (1); le procédé étant **caractérisé**

**par le fait que** l'étape de calcul d'une première charge de référence (RF1) et d'une seconde charge de référence (RF2), comprend l'étape de calcul de la première charge de référence (RF1) et de la seconde charge de référence (RF2), sur la base d'une valeur de référence commune (RFGS/2), et sur la base d'une première valeur de correction (- CORR) et d'une seconde valeur de correction (+ CORR) ; où la première valeur de correction (- CORR) présente la même valeur absolue que la seconde valeur de correction (+ CORR) ; où la première valeur de correction (- CORR) et la seconde valeur de correction (+ CORR) présentent des signes opposés.

14. Procédé selon la revendication 13, où l'étape de calcul d'une première charge de référence (RF1) et d'une seconde charge de référence (RF2), comprend l'étape de calcul de la première valeur de correction (- CORR) comme étant égale à la moitié de la différence entre la première charge actuelle (TG1) et la seconde charge actuelle (TG2).

15. Procédé selon la revendication 13 ou 14, comprenant l'étape de calcul d'un gradient de valeur de correction (GRADCORR).

16. Procédé selon la revendication 15, dans lequel l'étape de calcul d'un gradient de valeur de correction (GRADCORR) comprend l'étape de calcul d'un gradient de valeur de correction (GRADCORR) selon la formule suivante :

$$GRADCORR = |(MAXGRADUP2 - MAXGRADUP1) / 2|$$

lorsque le gradient de la valeur de référence de charge totale des turbines à gaz (RFGS) est positif ;
où :

- la valeur de référence de charge totale des turbines à gaz (RFGs) est égale à la différence entre la valeur de référence de charge actuelle totale (RFTOTcurrent) de la centrale (1), et la charge de vapeur actuelle (TV) de la turbine à vapeur (5) ;
- MAXGRADUP2 est le gradient croissant admissible maximum de la seconde turbine à gaz (3) ;
- MAXGRADUP1 est le gradient croissant admissible maximum de la première turbine à gaz (2) ;

17. Procédé selon la revendication 15, dans lequel l'étape de calcul d'un gradient de valeur de correction (GRADCORR) comprend l'étape de calcul d'un gradient de valeur de correction (GRADCORR) selon la formule suivante :

$$GRADCORR = - |(MAXGRADDOWN2 - MAXGRADDOWN1) / 2|$$

lorsque le gradient de la valeur de référence de charge totale des turbines à gaz (RFGs) est négatif ;
où :

- la valeur de référence de charge totale des turbines à gaz (RFGs) est égale à la différence entre la valeur de référence de charge actuelle totale (RFTOTcurrent) de la centrale (1), et la charge de vapeur actuelle (TV) de la turbine à vapeur (5) ;
- MAXGRADDOWN2 est le gradient décroissant admissible maximum de la seconde turbine à gaz (3) ;
- MAXGRADDOWN1 est le gradient décroissant admissible maximum de la première turbine à gaz (2).

18. Procédé selon l'une quelconque des revendications 13 à 17, comprenant l'étape de limitation des variations de la première charge de référence (RF1) à des valeurs comprises entre le gradient décroissant admissible maximum (MAXGRADDOWN1) de la première turbine à gaz (2), et le gradient croissant admissible maximum (MAXGRADUP1) de la première turbine à gaz (2).

19. Procédé selon l'une quelconque des revendications 13 à 18, comprenant l'étape de limitation des variations de la seconde charge de référence (RF2) à des valeurs comprises entre le gradient décroissant admissible maximum (MAXGRADDOWN2) de la seconde turbine à gaz (3), et le gradient croissant admissible maximum (MAXGRADUP2) de la seconde turbine à gaz (3).

20. Procédé selon l'une quelconque des revendications 13 à 19, où l'étape de calcul d'une première charge de référence (RF1) et d'une seconde charge de référence (RF2), comprend l'étape de calcul de la valeur de référence commune (RFGS/2) comme étant égale à la moitié de la différence entre la valeur de référence de charge actuelle totale (RFTOTcurrent) de la centrale (1), et la charge de vapeur actuelle (TV) d'une turbine à vapeur (5).

21. Procédé selon l'une quelconque des revendications 13 à 20, comprenant l'étape de limitation du gradient de charge (GRADTOT) de la centrale (1) à des valeurs comprises entre un gradient croissant de centrale maximum (MAXGRADUP), et un gradient décroissant de centrale maximum (MAXGRADDOWN).

22. Procédé selon la revendication 21, dans lequel l'étape de limitation du gradient de charge (GRADTOT) de la centrale (1), comprend l'étape de calcul du gradient croissant de centrale maximum (MAXGRADUP) sur la base du gradient croissant admissible maximum (MAXGRADUP1) de la première turbine à gaz (2), et sur la base du gradient croissant admissible maximum (MAXGRADUP2) de la seconde turbine à gaz (3), de préférence selon la formule suivante : MAXGRADUP = (MAXGRADUP1 + MAXGRADUP2).

23. Procédé selon la revendication 21 ou 22, dans lequel l'étape de limitation du gradient de charge (GRADTOT) de la centrale (1), comprend l'étape de calcul du gradient décroissant de centrale maximum (MAXGRADDOWN) sur la base du gradient décroissant admissible maximum (MAXGRADDOWN1) de la première turbine à gaz (2), et sur la base du gradient décroissant admissible maximum (MAXGRADDOWN2) de la seconde turbine à gaz (3), de préférence selon la formule suivante : MAXGRADDOWN = - |(MAXGRADDOWN1 + MAXGRADDOWN2)|.

FIG. 1

FIG. 2

FIG. 3

EP 2 765 288 B1

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3879616 A